# EUROPÄISCHE PATENTSCHRIFT

(11) **EP 1 729 253 B1**
(45) Veröffentlichungstag und Bekanntmachung des Hinweises auf die Patenterteilung: **24.06.2009**
(21) Anmeldenummer: 05103991.5
(22) Anmeldetag: 12.05.2005
(51) Int. Cl.: G06Q 20/00

(54) **Verfahren und System zur gesicherten Übertragung von Daten über eine NFC-Schnittstelle**
Method and system for secure data transfer over an NFC-connection
Procédé et système pour le transfert sécurisé de données par une interface NFC

(43) Veröffentlichungstag der Anmeldung: 06.12.2006
(73) Patentinhaber: Swisscom AG, 3050 Bern (CH)
(72) Erfinder: Grob, Reto, 3008 Bern (CH); Straumann, Hugo, 4653 Obergösgen (CH)
(74) Vertreter: BOVARD AG

(56) Entgegenhaltungen:
- WO-A-02/45441
- US-A1- 2003 218 532
- US-A1- 2004 066 278
- US-A1- 2005 077 349

## Beschreibung

### Technisches Gebiet

Die vorliegende Erfindung betrifft ein Verfahren und ein System zur gesicherten Übertragung von Daten über eine NFC-Schnittstelle, wobei Daten in einem Datenspeicher eines NFC-Tags abspeicherbar und mittels eines NFC-Scanners über die NFC-Schnittstelle zugreifbar sind.

### Stand der Technik

NFC Systeme (NFC: Near Field Communication) werden für verschiedenste Anwendungen eingesetzt. Unter anderem sind so genannte RFID-Tags (RFID: Radio Frequency Identification) bekannt, auf welchen Identifikationsdaten abspeicherbar sind und auf welche Identifikationsdaten mittels eines RFID-Scanners über eine RFID-Schnittstelle zugegriffen werden kann. Der Zugriff auf Identifikationsdaten erfolgt dabei über die drahtlose RFID-Schnittstelle mittels elektromagnetischer Wellen. Je nach Ausführung des RFID-Tags oder des RFID-Scanners, kann mittels des RFID-Scanners auf Identifikationsdaten eines RFID-Tags über eine Distanz von wenigen Zentimetern oder einigen Dutzend Meter zugegriffen werden. Dabei verfügen insbesondere RFID-Tags auf welche über eine grössere Distanz zugegriffen wird über einen eingebauten Energiespeicher wie beispielsweise eine Batterie. RFID-Tags mit eingebautem Energiespeicher werden auch als aktive RFID-Tags bezeichnet. Demgegenüber verfügen passive RFID-Tags über keinen eingebauten Energiespeicher. Die Übertragung von Identifikationsdaten basiert beispielsweise auf der Übertragung von elektromagnetischer Energie vom RFID-Scanner auf den RFID-Tag, wobei der RFID-Tag so eingerichtet ist, dass der RFID-Tag mittels solcher elektromagnetischer Energie zur Übertragung von Identifikationsdaten an den RFID-Scanner angeregt werden kann. Insbesondere passive RFID-Tags lassen sich sehr gut miniaturisieren. So kann ein RFID-Tag beispielsweise in einer Kundenkarte oder in einem Personalausweis angebracht sein. Die Anwendungsmöglichkeiten von RFID-Tags umfassen insbesondere Zahlungstransaktionsverfahren und Zugangskontrollverfahren. Bei einem Zahlungstransaktionsverfahren kann beispielsweise an einer Kasse eines Geschäfts mittels eines der Kasse zugeordneten RFID-Scanners auf Identifikationsdaten eines RFID-Tags eines Kunden zugegriffen werden, wobei mittels dieser Identifikationsdaten auf einem dem Kunden zugeordneten Konto ein Geldbetrag, welcher beispielsweise den Einkäufen des Kunden entspricht, abgebucht wird. Der RFID-Scanner und der RFID-Tag können dabei so ausgeführt sein, dass der Kunde beispielsweise die Kundenkarte mit dem angebrachten RFID-Tag in seinem Geldbeutel belassen kann und zur Auslösung einer Bezahlung nur den Geldbeutel auf den RFID-Scanner legen muss. Ein solches Zahlungstransaktionsverfahren bietet für den Kunden mehr Bequemlichkeit als ein Zahlungstransaktionsverfahren mittels Kreditkarte oder Bargeld. Ein solches Zahlungstransaktionsverfahren kann selbstverständlich durch eine Aufforderung zur Eingabe eines PIN (PIN: Personal Identification Number) an einem dem RFID-Scanner zugeordneten Eingabegerät zusätzlich abgesichert werden. Bei einem Zugangskontrollverfahren kann beispielsweise neben einer zugangskontrollierten Türe eines Betriebes ein RFID-Scanner angebracht sein und ein RFID-Tag kann am Personalausweis eines Angestellten des Betriebs angebracht sein. Für den Zugang zum Betrieb hält der Angestellt seine Personalkarte an den RFID-Scanner der zugangskontrollierten Türe. Mittels des RFID-Scanners wird auf Identifikationsdaten des RFID-Tags zugegriffen, wobei diese Identifikationsdaten überprüft werden und wobei bei einer erfolgreichen Überprüfung der Identifikationsdaten ein Schliessmechanismus der Türe entsperrt wird. Ein solches Zugangskontrollverfahren bietet für den Benutzer mehr Bequemlichkeit als ein Zugangskontrollverfahren mittels eines mechanischen Schlüssels. Es können zudem weitere Kriterien für die Gültigkeit von Identifikationsdaten zur Entsperrung des Schliessmechanismus der Türe berücksichtigt werden. So können Identifikationsdaten eines bestimmten Personalausweises beispielsweise nur zu bestimmbaren Tageszeiten zur Entsperrung des Schliessmechanismus der Türe verwendet werden oder, beispielsweise bei Personalaustritt, ein bestimmter Personalausweis kann gänzlich für das Öffnen von Türen eines Betriebs gesperrt werden. Die RFID-Technologie des Standes der Technik hat jedoch den Nachteil, dass Identifikationsdaten missbräuchlich aus einem RFID-Tag auslesbar sind. Beispielsweise kann ein RFID-Scanner auf alle Identifikationsdaten von in einem Geldbeutel angebrachten RFID-Tags, also beispielsweise von RFID-Tags verschiedener Kundenkarten, zugreifen und Identifikationsdaten können so beispielsweise sehr leicht missbräuchlich kopiert werden. Im Stand der Technik hat der Benutzer eines RFID-Tags keine Möglichkeit sicherzustellen, dass Identifikationsdaten nur an vertrauenswürdige RFID-Scanner übertragen werden. Ebenso ist es im Stand der Technik nicht möglich sicherzustellen, dass ein RFID-Scanner nur auf Identifikationsdaten eines vertrauenswürdigen RFID-Tags zugreift. Es ist weiter ein Nachteil des Standes der Technik, dass Identifikationsdaten ungeschützt zwischen dem RFID-Tag und dem RFID-Scanner übertragen werden.

### Offenbarung der Erfindung

Es ist eine Aufgabe der vorliegenden Erfindung, ein neues Verfahren und ein neues System zur gesicherten Übertragung von Daten über eine NFC-Schnittstelle vorzuschlagen, welche nicht die Nachteile des Standes der Technik aufweisen. Insbesondere ist es eine Aufgabe der vorliegenden Erfindung, ein neues Verfahren und ein neues System vorzuschlagen, welche sicherstellen, dass Identifikationsdaten eines NFC-Tags nur an vertrauenswürdige NFC-Scanner übertragen werden, dass ein NFC-Scanner nur auf Identifikationsdaten eines vertrauenswürdigen NFC-Tags zugreift und/oder dass Identifikationsdaten geschützt zwischen dem RFID-Tag und dem RFID-Scanner übertragen werden.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mittels eines Zentralmoduls Authentifizierungsdaten und/oder mindestens ein elektronischer Schlüssel generiert werden und im Zentralmodul abgespeichert werden, wobei die Authentifizierungsdaten und/oder der elektronische Schlüssel mindestens teilweise über mindestens ein Telekommunikationsnetzwerk auf ein Steuermodul des NFC-Tags und auf ein Steuermodul des NFC-Scanners übertragen werden, dass mittels einer Übertragung von genannten Authentifizierungsdaten über die NFC-Schnittstelle der NFC-Scanner durch das Steuermodul des NFC-Tags authentifiziert wird, dass bei einer erfolgreichen Authentifizierung des NFC-Scanners durch das Steuermodul des NFC-Tags mittels des Steuermoduls des NFC-Tags sowie mittels des genannten elektronischen Schlüssels Daten verschlüsselt und auf dem NFC-Tag für den NFC-Scanner zugreifbar abgespeichert werden, und dass mittels des NFC-Scanners auf die verschlüsselten Daten des NFC-Tags zugegriffen und an das Steuermodul des NFC-Scanners übertragen werden. Ein solches Verfahren hat insbesondere den Vorteil, dass mittels der Authentifizierung des NFC-Scanners durch das Steuermodul des NFC-Tags die Identifikationsdaten des NFC-Tags nur an einen vertrauenswürdigen NFC-Scanner übertragen werden. Ein solches Verfahren hat weiter den Vorteil, dass mittels der Verschlüsselung von Daten die Identifikationsdaten des NFC-Tags geschützt zwischen dem NFC-Tag und dem NFC-Scanner übertragen werden.

In einer Ausführungsvariante werden die verschlüsselten Daten, welche mittels des NFC-Scanners vom NFC-Tag auf das Steuermodul des NFC-Scanners übertragen wurden, mittels des Steuermoduls des NFC-Scanners sowie mittels des elektronischen Schlüssels entschlüsselt. Ein solches Verfahren hat den Vorteil, dass Identifikationsdaten für weitere nachfolgende Schritte, wie beispielsweise die Übermittlung an ein Kontoführungsmoduls eines Zahlungstransaktionsverfahrens oder eines Schliessmechanismusverwaltungsmoduls eines Zugangskontrollverfahrens, direkt in unverschlüsselter Form vorliegen.

In einer weiteren Ausführungsvariante wird mittels einer Übertragung von Authentifizierungsdaten über die NFC-Schnittstelle der NFC-Tag durch das Steuermodul des NFC-Scanners authentifiziert wird, wobei der NFC-Scanner nur bei einer erfolgreichen Authentifizierung des NFC-Tags auf Daten des NFC-Tags zugreift. Ein solches Verfahren hat insbesondere den Vorteil, dass durch den NFC-Scanner überprüfbar ist, ob ein NFC-Tag vertrauenswürdig ist und ob somit ein Zugriff auf Daten des NFC-Tags ohne Risiko eines Datenangriffs, wie beispielsweise eines Virusangriffs, durchführbar ist.

### Kurze Beschreibung der Zeichnung

Nachfolgend werden Ausführungsvarianten der vorliegenden Erfindung anhand von Beispielen beschrieben. Die Beispiele der Ausführungen werden durch folgende beigelegte Figur illustriert:

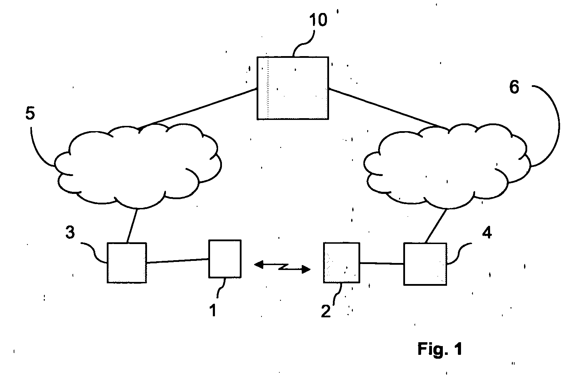

Figur 1 zeigt ein Blockdiagramm eines erfindungsgemässen Systems.

### Ausführungsform(en) der Erfindung

In Figur 1 bezieht sich das Bezugszeichen 1 auf einen NFC-Tag und das Bezugszeichen 3 bezieht sich auf ein Steuermodul des NFC-Tags. Das Steuermodul des NFC-Tags 3 ist über ein Telekommunikationsnetzwerk mit einem Zentralmodul 10 verbindbar. Der NFC-Tag 1 ist beispielsweise ein an einem Mobilfunkgerät angebrachter RFID-Tag welcher über einen Datenbus mit einem Mikroprozessor des Mobilfunkgeräts verbindbar ist. Das Steuermodul des NFC-Tags 3 ist beispielsweise als ein auf dem Mikroprozessor des Mobilfunkgeräts ablauffähiges Softwaremodul ausgeführt. Ein solches Softwaremodul kann auf die durch das Betriebssystem des Mobilfunkgeräts zur Verfügung gestellten Applikationsschnittstellen zugreifen und somit Funktionen des Mobilfunkgeräts nutzen. Unter anderem kann das Steuermodul des NFC-Tags 3 Verbindungen zu einem Mobilfunknetz und über das Mobilfunknetz Verbindungen zu einer mit dem Mobilfunknetz verbindbaren Zentralmodul 10 erstellen. Mittels des Steuermoduls des NFC-Tags 3 können Daten auf dem NFC-Tag abgespeichert und für den Zugriff durch einen NFC-Scanner freigegeben werden. Ebenso können mittels des Steuermoduls des NFC-Tags 3 auf Daten, welche von einem NFC-Scanner auf dem NFC-Tag abgespeichert werden, zugegriffen werden. Das Steuermodul des NFC-Tags 3 umfasst beispielsweise auch Funktionen zur Anzeige von Informationen auf einem Display des Mobilfunkgeräts sowie beispielsweise auch Funktionen zur Erfassung von Benutzereingaben mittels einer Eingabevorrichtung des Mobilfunkgeräts. Das Steuermodul des NFC-Tags 3 kann insbesondere auch Tabellen oder Profile mit Identifikationsdaten umfassen, wobei mittels eines Displays des Mobilfunkgeräts einem Benutzer ein Menu zur Selektion von bestimmbaren Identifikationsdaten anzeigbar ist, und wobei bestimmbare Identifikationsdaten durch einen Benutzer mittels einer Eingabevorrichtung selektierbar sind. So kann die Tabelle mit Identifikationsdaten beispielsweise Identifikationsdaten zur Auslösung einer Zahlungstransaktion und Identifikationsdaten zur Entsperrung einer zugangskontrollierten Türe umfassen. Mittels einer Eingabevorrichtung des Mobilfunkgeräts kann ein Benutzer somit zwischen verschiedenen Identifikationsdaten auswählen, wobei nach der Selektion von bestimmbaren Identifikationsdaten diese Identifikationsdaten beispielsweise gemäss dem nachfolgend beschriebenen Verfahren auf den NFC-Tag übertragbar sind.

In Figur 1 bezieht sich das Bezugszeichen 2 auf einen NFC-Scanner, beispielsweise auf einen RFID-Scanner. Der NFC-Scanner 2 umfasst Mittel zur Übertragung von Daten, wie beispielsweise von Identifikationsdaten, über eine NFC-Schnittstelle vom NFC-Tag auf den NFC-Scanner. Der NFC-Tag und der NFC-Scanner können beispielsweise als RFID Systeme gemäss dem EPC UHF Generation 2 RFID Standard oder gemäss irgendeinem anderen Standard ausgeführt sein. Daten oder Identifikationsdaten können dabei mittels elektromagnetischer Wellen zwischen dem NFC-Tag und dem NFC-Scanner über Distanzen zwischen dem NFC-Tag und dem NFC-Scanner von wenigen Zentimetern bis zu einigen Dutzenden Metern übertragen werden. Dabei können Daten vom NFC-Scanner auf einen Speicherbereich des NFC-Tags geschrieben werden oder es können mittels des NFC-Scanners Daten von einem Speicherbereich des NFC-Tags gelesen werden. In Figur 1 bezieht sich das Bezugszeichen 4 auf ein Steuermodul des NFC-Scanners. Der NFC-Scanner kann beispielsweise einen Mikroprozessor umfassen und das Steuermodul des NFC-Scanners 4 kann beispielsweise als ein auf dem Mikroprozessor des NFC-Scanners ablauffähiges Softwaremodul ausgeführt sein. Weiter ist der NFC-Scanner mit einem Telekommunikationsnetzwerk verbindbar, wobei über das Telekommunikationsnetzwerk Daten zwischen dem Steuermodul des NFC-Scanners 4 und dem Zentralmodul 10 übertragen werden können.

In Figur 1 bezieht sich das Bezugszeichen 10 auf ein Zentralmodul. Das Zentralmodul 10 umfasst Mittel zur Generierung und Speicherung von Authentifizierungsdaten und/oder von elektronischen Schlüsseln. Das Zentralmodul 10 kann beispielsweise als ein auf einem Mikroprozessor ablauffähiges Softwaremodul ausgeführt und in einem HLR (Home Location Register) eines Mobilfunknetzwerks angeordnet sein.

In einem ersten Beispiel wählt ein Benutzer auf einem Mobilfunkgerät mit integriertem NFC-Tag 1 mittels eines Steuermoduls des NFC-Tags 3 sowie mittels des Displays und der Eingabevorrichtung des Mobilfunkgeräts ein Profil mit Identifikationsdaten. Ein Profil mit Identifikationsdaten umfasst insbesondere Angaben, wie beispielsweise eine Netzwerkadresse, zur Verbindung des Steuermoduls des NFC-Tags 3 mit dem Zentralmodul 10, wobei unterschiedliche Profile unterschiedliche Angaben zur Verbindung mit unterschiedlichen Zentralmodulen umfassen können. Sobald ein bestimmbares Profil selektiert ist, wird beispielsweise auf Anfrage des Steuermoduls des NFC-Tags das Mobilfunkgerät anschliessend beim Zentralmodul 10 authentifiziert. Die Authentifizierung kann beispielsweise auf Daten einer SIM Karte (SIM: Subscriber Identity Module) und auf Daten eines HLR basieren. Anschliessend fordert das Steuermodul des NFC-Tags beim Zentralmodul 10 eine eindeutige Identifikation x, zwei Session Identifikationen (A,B) sowie ein Verschlüsselungsschema Z an. Das Steuermodul des NFC-Tags speichert die Session Identifikation A in einem Speicherbereich des NFC-Tags ab. Der NFC-Scanner 2 greift anschliessend auf die Session Identifikation A zu. Dabei kann der NFC-Scanner beispielsweise in regelmässigen Zeitintervallen versuchen auf die Session Identifikation A zuzugreifen und diesen Zugriff durchführen, sobald in einem Speicherbereich des NFC-Tags eine Session Identifikation A abgespeichert ist. Mittels des Steuermoduls des NFC-Scanners 4 wird der NFC-Scanner über das Telekommunikationsnetzwerk gegenüber dem Zentralmodul 10 authentifiziert und das Steuermodul des NFC-Scanners 4 fordert mittels der Session Identifikation A eine eindeutige Identifikation y und das Verschlüsselungsschema Z an. Mittels des Steuermoduls des NFC-Scanners 4 wird die Identifikation y mittels des Verschlüsselungsschemas Z verschlüsselt und mittels des NFC-Scanners 2 wird die verschlüsselte Identifikation y auf dem NFC-Tag 1 abgespeichert. Das Steuermodul des NFC-Tags 3 entschlüsselt die verschlüsselte Identifikation y und sendet die Identifikation y unter Benutzung der Session Identifikation B und A sowie der eindeutigen Identifikationen y und x zur Überprüfung an das Zentral modul 10. Bei einer erfolgreichen Überprüfung übermittelt das Zentralmodul 10 eine Bestätigungsmeldung an das Steuermodul des NFC-Tags 3 des Mobilfunkgeräts. Mittels des Steuermoduls des NFC-Tags 3 sowie mittels des Displays des Mobilfunkgeräts wird der Benutzer anschliessend aufgefordert die Übertragung von Identifikationsdaten zwischen dem NFC-Tag und dem NFC-Scanner zu bestätigen. Bei einer positiven Bestätigung werden mittels des Verschlüsselungsschemas Z Identifikationsdaten verschlüsselt und zur Übertragung an den NFC-Scanner 2 freigegeben. Die Freigabe kann beispielsweise auf Berechtigungsdaten basieren, welche mittels des Zentralmoduls 10 auf den NFC-Scanner übertragen werden.

In einem zweiten Beispiel wird durch den NFC-Scanner 2 vom NFC-Tag 1 eine Session Identifikation A angefordert, sobald sich der NFC-Tag im Wirkungsbereich des NFC-Scanners befindet. Eine solche Aufforderung kann durch das Abspeichern von Aufforderungsdaten in einen Speicherbereich des NFC-Tags durch den NFC-Scanner erfolgen. Das Steuermodul des NFC-Tags 3 ist dabei so konfiguriert, dass aufgrund der Anforderung einer Session Identifikation A eine Authentifizierung des Mobilfunkgeräts gegenüber dem Zentralmodul 10 ausgelöst wird. Anschliessend fordert das Steuermodul des NFC-Tags vom Zentralmodul 10 eine eindeutige Identifikation x, die Session Identifikationen A und B sowie ein Verschlüsselungsschema Z an. Mittels des Steuermoduls des NFC-Tags 3 wird die Session Identifikation A in einem Speicherbereich des NFC-Tags 1 zur Übertragung an den NFC-Scanner 2 abgespeichert. Der NFC-Scanner 2 ist beispielsweise so eingerichtet, dass dieser in regelmässigen Zeitintervallen überprüft, ob ein Zugriff auf die Session Identifikation A möglich ist und den Zugriff bei einer positiven Überprüfung durchführt. Mittels des Steuermoduls des NFC-Scanners 4 wird der NFC-Scanner 2 über ein Telekommunikationsnetzwerk gegenüber dem Zentralmodul 10 authentifiziert. Mittels der Session Identifikation A fordert das Steuermodul des NFC-Scanners 4 vom Zentralmodul 10 die Übertragung einer eindeutigen Identifikation y sowie des Verschlüsselungsschemas Z an. Mittels des Steuermoduls des NFC-Scanners 4 wird die Identifikation y mittels des Verschlüsselungsschemas Z verschlüsselt und mittels des NFC-Scanners 2 wird die verschlüsselte Identifikation y auf dem NFC-Tag 1 abgespeichert. Das Steuermodul des NFC-Tags 3 entschlüsselt die verschlüsselte Identifikation y und sendet die Identifikation y unter Benutzung der Session Identifikation B und A sowie der eindeutigen Identifikationen y und x zur Überprüfung an das Zentralmodul 10. Bei einer erfolgreichen Überprüfung übermittelt das Zentralmodul 10 eine Bestätigungsmeldung an das Steuermodul des NFC-Tags 3 des Mobilfunkgeräts. Mittels des Steuermoduls des NFC-Tags 3 sowie mittels des Displays des Mobilfunkgeräts wird der Benutzer aufgefordert, bestimmbare Identifikationsdaten zur Übertragung zwischen dem NFC-Tag und dem NFC-Scanner freizugeben. Die Auswahl und Freigabe von Identifikationsdaten kann mittels einer Menuführung sowie mittels der Eingabevorrichtung des Mobilfunkgeräts erfolgen. Die selektierten Identifikationsdaten werden mittels des Verschlüsselungsschemas Z verschlüsselt und zur Übertragung an den NFC-Scanner 2 freigegeben. Die Freigabe kann beispielsweise auf Berechtigungsdaten basieren, welche mittels des Zentralmoduls 10 auf den NFC-Scanner übertragen werden.

In einem dritten Beispiel wird durch den NFC-Scanner 2 ein Datenelement in einen Speicherbereich des NFC-Tags 1 geschrieben, sobald sich der NFC-Tag im Wirkungsbereich des NFC-Scanners 2 befindet. Dieser Speicherbereich wird durch das Steuermodul des NFC-Tags beispielsweise durch einen Lesevorgang regelmässig überprüft. Sobald das Steuermodul des NFC-Tags 3 in diesem Speicherbereich einen Schreibvorgang eines Datenelements detektiert, wird eine Identifikation I, beispielsweise eine durch das Steuermodul des NFC-Tags 3 generierte und im Steuermodul des NFC-Tags 3 abspeicherbare Zufallszahl, mittels des Steuermoduls des NFC-Tags 3 über ein Telekommunikationsnetzwerk an ein Zentralmodul 10 übermittelt. Basierend auf der Identifikation I generiert das Zentralmodul 10 einen elektronischen Schlüssel K und speichert diesen elektronischen Schlüssel der Identifikation I zugeordnet im Zentralmodul 10 ab. Der elektronische Schlüssel K wird anschliessend vom Zentralmodul 10 über ein Telekommunikationsnetzwerk auf das Steuermodul des NFC-Tags 3 übertragen. Selbstverständlich kann diese Übertragung über eine gesicherte Datenverbindung zwischen dem Zentralmodul 10 und dem Steuermodul des NFC-Tags 3 erfolgen. Anschliessend kann der Benutzer des Mobilfunkgeräts mittels des Steuermoduls 3 sowie mittels des Displays des Mobilfunkgeräts zur Selektion von Identifikationsdaten aufgefordert werden. Der Benutzer kann mittels einer Eingabevorrichtung des Mobilfunkgeräts bestimmbare Identifikationsdaten selektieren. Die vom Benutzer selektierten Identifikationsdaten werden anschliessend mittels des Steuermoduls des NFC-Tags 3 sowie des Schlüssels K verschlüsselt und zusammen mit der Identifikation I in einem Speicher des NFC-Tags 1 für den Zugriff durch den NFC-Scanner 2 abgespeichert. Beispielsweise mittels eines regelmässigen Lesevorgangs des NFC-Scanners 2 wird dieser Speicherbereich überwacht. Sobald in diesem Speicherbereich verschlüsselte Identifikationsdaten sowie die Identifikation I verfügbar sind, werden diese mittels des NFC-Scanners 2 an das Steuermodul des NFC-Scanners 4 übertragen. Das Steuermodul des NFC-Scanners 4 greift anschliessend, gegebenenfalls nach einer Authentifizierung gegenüber dem Zentralmodul 10, über ein Telekommunikationsnetzwerk auf den der Identifikation I zugeordneten elektronischen Schlüssel K zu und verwendet den elektronischen Schlüssel K zur Entschlüsselung der verschlüsselten Identifikationsdaten.

An dieser Stelle sei erwähnt, dass Authentifizierung und Verschlüsselung von Daten gemäss bekannter Verfahren wie beispielsweise gemäss in der GSM (GSM: Global System for Mobile communication) Technologie üblichen Standards durchführbar sind. In einer Ausführungsvariante ist das Steuermodul des NFC-Tags 3 und/oder das Steuermodul des NFC-Scanner 4 mit einem IP (IP: Internet Protocol) Netzwerk verbindbar, wobei mittels geeigneter Netzwerkgeräten, wie beispielsweise Routern, der Zugriff auf das Zentralmodul 10 sichergestellt ist. Eine Kommunikation zwischen dem Steuermodul des NFC-Scanners 4 und dem Zentralmodul 10 kann beispielsweise auch über die NFC-Schnittstelle sowie über die Telekommunikationsverbindung zwischen dem Steuermodul des NFC-Tags und dem Zentralmodul 10 erfolgen. Bei einer solchen Ausführungsvariante werden vorteilhafterweise zusätzliche elektronische Schlüssel im Steuermodul des NFC-Scanners sowie im Steuermodul des NFC-Tags zur Authentifizierung und Verschlüsselung einer Kommunikationsverbindung über die NFC-Schnittstelle angebracht. Solche zusätzliche elektronische Schlüssel können sich insbesondere auf eine bestimmbare Gerätegruppe bestehend aus mehreren NFC-Scannern und NFCTags, wie beispielsweise die Gerätegruppe eines Anbieters von Waren oder Dienstleistungen, beziehen, wobei beispielsweise derselbe elektronische Schlüssel in allen Geräten der Gerätegruppe angebracht ist.

## Patentansprüche

1. Verfahren zur gesicherten Übertragung von Daten über eine NFC-Schnittstelle, wobei Daten in einem Datenspeicher eines NFC-Tags (1) abspeicherbar und mittels eines NFC-Scanners (2) über die NFC-Schnittstelle zugreifbar sind, **dadurch gekennzeichnet,**
**dass** mittels eines Zentralmoduls (10) Authentifizierungsdaten und/oder mindestens ein elektronischer Schlüssel generiert werden und im Zentralmodul (10) abgespeichert werden, wobei die Authentifizierungsdaten und/oder der elektronische Schlüssel mindestens teilweise über mindestens ein Telekommunikationsnetzwerk (5,6) auf ein Steuermodul des NFC-Tags (3) und auf ein Steuermodul des NFC-Scanners (4) übertragen werden,
**dass** mittels einer Übertragung von genannten Authentifizierungsdaten über die NFC-Schnittstelle der NFC-Scanner (2) durch das Steuermodul des NFC-Tags (3) authentifiziert wird,
**dass** bei einer erfolgreichen Authentifizierung des NFC-Scanners (2) durch das Steuermodul des NFC-Tags (3) mittels des Steuermoduls des NFC-Tags (3) sowie mittels des genannten elektronischen Schlüssels Daten verschlüsselt und auf dem NFC-Tag (1) für den NFC-Scanner (2) zugreifbar abgespeichert werden, und
**dass** mittels des NFC-Scanners (2) auf die verschlüsselten Daten des NFC-Tags (1) zugegriffen und an das Steuermodul des NFC-Scanners (4) übertragen werden.

2. Verfahren nach Anspruch 1, **dadurch gekennzeichnet, dass** die verschlüsselten Daten, welche mittels des NFC-Scanners (2) vom NFC-Tag (1) auf das Steuermodul des NFC-Scanners (4) übertragen wurden, mittels des Steuermoduls des NFC-Scanners (4) sowie mittels des elektronischen Schlüssels entschlüsselt werden.

3. Verfahren nach Anspruch 1 oder 2, **dadurch gekennzeichnet, dass** mittels einer Übertragung von Authentifizierungsdaten über die NFC-Schnittstelle der NFC-Tag (1) durch das Steuermodul des NFC-Scanners (4) authentifiziert wird und dass der NFC-Scanner (2) nur bei einer erfolgreichen Authentifizierung des NFC-Tags (1) auf Daten des NFC-Tags (1) zugreift.

4. Verfahren nach Anspruch 3, **dadurch gekennzeichnet, dass** mittels des Steuermoduls des NFC-Tags (3) eine Identifikation über eine Telekommunikationsverbindung an das Zentralmodul (10) übertragen wird, dass mittels des Zentralmoduls (10) ein der Identifikation zugeordneter elektronischer Schlüssel sowie eine der Identifikation zugeordnete erste Kontrollnummer erzeugt wird, wobei die erste Kontrollnummer über eine Telekommunikationsverbindung an das Steuermodul des NFC-Tags (3) übertragen wird und mittels des Steuermoduls des NFC-Tags (3) im NFC-Tag (1) abgespeichert wird, dass mittels des NFC-Scanners (2) auf die im NFC-Tag (1) abgespeicherte erste Kontrollnummer zugegriffen wird, wobei mittels des Steuermoduls des NFC-Scanners (4) die erste Kontrollnummer über eine Telekommunikationsverbindung an das Zentralmodul (10) übertragen und vom Zentralmodul (10) überprüft wird, dass bei einer erfolgreichen Überprüfung der ersten Kontrollnummer eine der Identifikation zugeordnete zweite Kontrollnummer an das Steuermodul des NFC-Scanners (4) übertragen wird, wobei mittels des NFC-Scanners (2) die zweite Kontrollnummer auf den NFC-Tag (1) übertragen und im NFC-Tag (1) abgespeichert wird, dass mittels des Steuermoduls des NFC-Tags die im NFC-Tag (1) abgespeicherte zweite Kontrollnummer an das Zentralmodul (10) übermittelt wird und vom Zentralmodul (10) überprüft wird, dass bei einer erfolgreichen Überprüfung der zweiten Kontrollnummer Daten mittels des elektronischen Schlüssels verschlüsselt werden und auf dem NFC-Tag (1) abgespeichert werden, und dass mittels des NFC-Scanners (2) auf die im NFC-Tag (1) abgespeicherten verschlüsselten Daten zugegriffen wird.

5. Verfahren nach Anspruch 1 oder 2, **dadurch gekennzeichnet, dass** mittels des Steuermoduls des NFC-Tags (3) eine Identifikation über eine Telekommunikationsverbindung an ein Zentralmodul (10) übertragen wird, dass mittels des Zentralmoduls (10) ein der Identifikation zugeordneter elektronischer Schlüssel erzeugt wird, dass mittels des elektronischen Schlüssels Daten verschlüsselt werden, dass mittels des ersten Moduls die Identifikation und die verschlüsselten Daten im Datenspeicher des NFC-Tags (1) abgespeichert werden, dass mittels des NFC-Scanners (2) auf die im NFC-Tag (1) abgespeicherte Identifikation und auf abgespeicherte verschlüsselte Daten zugegriffen wird, und dass mittels des Steuermoduls der NFC-Scanners (2) mindestens Teile der verschlüsselten Daten entschlüsselt werden, wobei das Steuermodul des NFC-Scanners (4) für die Entschlüsselung der verschlüsselten Daten auf den im Zentralmodul (10) abgespeicherten und der Identifikation zugeordneten elektronischen Schlüssel zugreift.

6. System zur gesicherten Übertragung von Daten über eine NFC-Schnittstelle, wobei Daten in einem Datenspeicher eines NFC-Tags (1) abspeicherbar und mittels eines NFC-Scanners (2) über die NFC-Schnittstelle zugreifbar sind, **dadurch gekennzeichnet,**
**dass** ein Zentralmodul (10) Mittel umfasst zur Generierung und Speicherung von Authentifizierungsdaten und/oder mindestens eines elektronischen Schlüssels, wobei das Zentralmodul (10), der NFC-Tag (1) und der NFC-Scanner (2) mit mindestens einem Telekommunikationsnetzwerk (5,6) verbindbar sind, und wobei Authentifizierungsdaten und/oder der elektronische Schlüssel mindestens teilweise über das Telekommunikationsnetzwerk (5,6) an ein Steuermodul des NFC-Tags (3) und an ein Steuermodul des NFC-Scanners (4) übertragbar sind,
**dass** der NFC-Scanner (2) Mittel umfasst zur Übertragung von genannten Authentifizierungsdaten über die NFC-Schnittstelle, wobei übertragene Authentifizierungsdaten durch das Steuermodul des NFC-Tags (3) authentifizierbar sind,
**dass** das Steuermodul des NFC-Tags (3) Mittel umfasst um bei einer erfolgreichen Authentifizierung des NFC-Scanners (2) durch das Steuermodul des NFC-Tags (3) Daten mittels des genannten elektronischen Schlüssels zu verschlüsseln und auf dem NFC-Tag (1) für den NFC-Scanner (2) zugreifbar abzuspeichern, und
**dass** der NFC-Scanner (2) Mittel umfasst um auf die verschlüsselten Daten des NFC-Tags (1) zuzugreifen und an das Steuermodul des NFC-Scanners (4) zu übertragen.

7. System nach Anspruch 6, **dadurch gekennzeichnet, dass** das Steuermodul des NFC-Scanners (4) Mittel umfasst um mittels des elektronischen Schlüssels verschlüsselte Daten, welche mittels des NFC-Scanners (2) vom NFC-Tag (1) auf das Steuermodul des NFC-Scanners (4) übertragbar sind, zu entschlüsseln.

8. System nach Anspruch 6 oder 7, **dadurch gekennzeichnet, dass** das Steuermodul des NFC-Scanners (4) Mittel umfasst um mittels einer Übertragung von Authentifizierungsdaten über die NFC-Schnittstelle den NFC-Tag (1) zu authentifizieren, wobei Daten des NFC-Tags (1) nur bei einer erfolgreichen Authentifizierung des NFC-Tags (1) mittels des NFC-Scanners (2) zugreifbar sind.

## Claims

1. Method for secure data transfer over an NFC interface, data being storable in a data memory of an NFC tag (1) and being accessible by means of an NFC scanner (2) via the NFC interface, **characterised**
**in that** authentication data and/or at least one electronic key are generated by means of a central module (10) and are stored in the central module (10), the authentication data and/or the electronic key being transmitted at least in part over at least one telecommunication network (5, 6) to a control module of the NFC tag (3) and to a control module of the NFC scanner (4),
**in that**, by means of a transmission of said authentication data via the NFC interface, the NFC scanner (2) is authenticated by the control module of the NFC tag (3),
**in that** with a successful authentication of the NFC scanner (2) by the control module of the NFC tag (3) data are encrypted and are stored on the NFC tag (1), by means of the control module of the NFC tag (3) as well as by means of said electronic key, in a way accessible to the NFC scanner (2), and
**in that** by means of the NFC scanner (2) the encrypted data of the NFC tag (1) are accessed and are transmitted to the control module of the NFC scanner (4).

2. Method according to claim 1, **characterised in that** the encrypted data, which were transmitted by means of the NFC scanner (2) from the NFC tag (1) to the control module of the NFC scanner (4), are decrypted by means of the control module of the NFC scanner (4) as well as by means of the electronic key.

3. Method according to claim 1 or 2, **characterised in that,** by means of a transmission of authentication data via the NFC interface, the NFC tag (1) is authenticated by the control module of the NFC scanner (4), and **in that** the NFC scanner (2) accesses data of the NFC tag (1) only with a successful authentication of the NFC tag (1).

4. Method according to claim 3, **characterised in that** by means of the control module of the NFC tag (3) an identification is transmitted via a telecommunication connection to the central module (10), **in that** by means of the central module (10) an electronic key assigned to the identification as well as a first control number assigned to the identification is generated, the first control number being transmitted via a telecommunication connection to the control module of the NFC tag (3) and is stored in the NFC tag (1) by means of the control module of the NFC tag (3) **in that** the first control number stored in the NFC tag (1) is accessed by means of the NFC scanner (2), the first control number being transmitted by means of the control module of the NFC scanner (4) via a telecommunication connection to the central module (10) and is checked by the central module (10), **in that**, with a successful checking of the first control number, a second control number assigned to the identification is transmitted to the control module of the NFC scanner (4), the second control number being transmitted to the NFC tag (1) by means of the NFC scanner (2) and being stored in the NFC tag (1), **in that** the second control number stored in the NFC tag (1) is transmitted to the central module (10) by means of the control module of the NFC tag and is checked by the central module (10), **in that**, with a successful checking of the second control number, data are encrypted by means of the electronic key and are stored on the NFC tag (1), and **in that** the encrypted data stored in the NFC tag (1) are accessed, by means of the NFC scanner (2).

5. Method according to claim 1 or 2, **characterised in that** an identification is transmitted via a telecommunication connection to a central module (10) by means of the control module of the NFC tag (3), **in that** an electronic key assigned to the identification is generated by means of the central module (10), **in that** data are encrypted by means of the electronic key,
**in that** the identification and the encrypted data are stored in the data memory of the NFC tag (1) by means of the first module, **in that** the identification stored in the NFC tag (1) and stored encrypted data are accessed by means of the NFC scanner (2), and **in that** at least parts of the encrypted data are decrypted by means of the control module of the NFC scanner (2), whereby, for the decryption of the encrypted data, the control module of the NFC scanner (4) accesses the electronic key stored in the central module (10) and assigned to the identification.

6. System for secure transmission of data over an NFC interface, data being storable in a data memory of an NFC tag (1) and being accessible over the NFC interface by means of an NFC scanner (2), **characterised**
**in that** a central module (10) comprises means of generation and storage of authentication data and/or at least one electronic key, the central module (10), the NFC tag (1) and the NFC scanner (2) being connectible with at least one telecommunication network (5, 6), and authentication data and/or the electronic key being transmittable at least in part over the telecommunication network (5, 6) to a control module of the NFC tag (3) and to a control module of the NFC scanner (4),
**in that** the NFC scanner (2) comprises means of transmission of authentication data via the NFC interface, transmitted authentication data being able to be authenticated by the control module of the NFC tag (3),
**in that** the control module of the NFC tag (3) comprises means of encrypting data by means of said electronic key, in the event of successful authentication of the NFC scanners (2) by the control module of the NFC tag (3), and of storing said data on the NFC tag (1) in a way accessible to the NFC scanner (2), and
**in that** the NFC scanner (2) comprises means of accessing the encrypted data of the NFC tag (1) and of transmitting it to the control module of the NFC scanner (4).

7. System according to claim 6, **characterised in that** the control module of the NFC scanner (4) comprises means of decrypting, by means of the electronic key, encrypted data transmittable, by means of the NFC scanner (2), from the NFC tag (1) to the control module of the NFC scanner (4)

8. System according to claim 6 or 7, **characterised in that** the control module of the NFC scanner (4) comprises means of authenticating the NFC tag (1) by means of a transmission of authentication data via the NFC interface, data of the NFC tag (1) being accessible only with a successful authentication of the NFC tag (1) by means of the NFC scanner (2).

## Revendications

1. Procédé pour la transmission sécurisée de données par l'intermédiaire d'une interface NFC (Near Field communication = communication en champ proche), les données étant stockables dans une mémoire de données d'un tag NFC (1) (balise NFC) et accessibles au moyen d'un scanner NFC (2) par l'intermédiaire de l'interface NFC, **caractérisé en ce**
**qu'**au moyen d'un module central (10) des données d'authentification et/ou au moins une clé électronique sont générées et sont stockées dans le module central (10), les données d'authentifications et/ou la clé électronique étant transmises au mo moins partiellement par au moins un réseau de télécommunication (5, 6) à un module de commande du tag NFC (3) et à un module de commande du scanner NFC (4),
**qu'**au moyen d'une transmission desdites données d'authentification par l'interface NFC, le scanner NFC (2) est authentifié par le module de commande du tag NFC (3),
**qu'**en cas d'une authentification réussie du scanner NFC (2) par le module de commande du tag NFC (3) au moyen du module de commande du tag NFC (3) ainsi qu'au moyen de ladite clé électronique des données sont cryptées et sont stockées sur le tag NFC (1) et accessibles pour le scanner NFC (2), et
**qu'**il est possible d'accéder aux données cryptées du tag NFC (1) au moyen du scanner NFC (2) et de les transmettre au module de commande du scanner NFC (4).

2. Procédé selon la revendication 1, **caractérisé en ce que** les données cryptées qui ont été transférées au moyen du scanner NFC (2) du tag NFC (1) au module de commande du scanner NFC (4) sont décryptées au moyen du module de commande du scanner NFC (4) ainsi qu'au moyen de la clé électronique.

3. Procédé selon la revendication 1 ou 2, **caractérisé en ce qu'**il est authentifié au moyen d'une transmission de données d'authentification par l'interface NFC du tag NFC (1) par le module de commande du scanner NF (4) et **en ce que** le scanner NFC (2) n'accède aux données du tag NFC (1) que dans le cas d'une authentification du tag NFC (1).

4. Procédé selon la revendication 3, **caractérisé en ce qu'**au moyen du module de commande du tag NFC (3), une identification est transmise au module central (10) par une connexion de communication, **en ce qu'**au moyen du module central (10) une clé électronique associée à l'identification est générée ainsi qu'un premier numéro de contrôle associé à l'identification sont générés, le premier numéro de contrôle étant transmis par une connexion de télécommunication au module de commande du tag NFC (3) et stocké au moyen au moyen du module de commande du tag NFC (1), **en ce qu'**au moyen du scanner NFC (2), on a accès au premier numéro de contrôle stocké dans le tag NFC (1), au moyen du module de commande du scanner NFC (4), le premier numéro de contrôle est transmis par une connexion de télécommunication au module central (10) et est vérifié par le module central (10), **en ce que** dans le cas d'une vérification positive du premier numéro de contrôle, un second numéro de contrôle associé à l'identification est transmis au module de commande du scanner NFC (4), au moyen du scanner NFC (2), le second numéro de contrôle est transmis au tag NFC (1) et est stocké dans le tag NFC (1), **en ce qu'**au moyen du module de commande du tag NFC, le second numéro de contrôle stocké dans le tag NFC (1) est transmis au module central (10) et est vérifié par le module central (10), **en ce qu'**en cas d'une vérification positive du second numéro de contrôle, des données sont cryptées au moyen de la clé électronique et sont stockées sur le tag NFC (1) et **en ce que** des données cryptées dans le tag NFC (1) sont accessibles au moyen du scanner NFC (2).

5. Procédé selon la revendication 1 ou 2, **caractérisé en ce qu'**au moyen du module de commande du tag NFC (3), une identification est transmise au module central (10) par une connexion de communication, **en ce qu'**au moyen du module central (10) une clé électronique associée à l'identification est générée, **en ce qu'**au moyen de la clé électronique des données sont cryptées, **en ce qu'**au moyen du premier module l'identification et les données cryptées sont stockées dans la mémoire de données du tag NFC (1), **en ce qu'**au moyen du scanner NFC (2), il est possible d'accéder à l'identification stockée dans le tag NFC (1) et aux données cryptée stockées et **en ce qu'**au moyen du module de commande du scanner NFC (2) au moins des parties des données cryptées sont décryptées, le module de commande du scanner NFC (4) ayant accès à la clé électronique associée à l'identification et stockée dans le module central (10) pour le décryptage des données cryptées.

6. Système pour la transmission sécurisée de données par une interface NFC, des données étant stockées dans une mémoire de données d'un tag NFC (1) et étant accessibles au moyen d'un scanner NFC (2) par l'intermédiaire d'une interface NFC,
en ce qu'un module central (10) comprend des moyens pour la génération et le stockage de données d'authentification et/ou au moins une clé électronique, le module central (10), le tag NFC (1) et le scanner NFC (2) étant reliables à au moins un réseau de télécommunication (5, 6), et des données d'authentification et/ou la clé électronique étant transmissibles au moins partiellement par le réseau de télécommunication (5, 6) à un module de commande du tag NFC (3) et à un module de commande du scanner NFC (4),
en ce que le scanner NFC (2) comprend des moyens pour la transmission des dites données d'authentification par l'interface NFC, les données d'authentification transmises étant authentifiables par le module de commande du tag NFC (3),
en ce que le module de commande du tag NFC (3) comprend des moyens pour crypter, en cas d'une authentification réussie du scanner NFC (2) par le module de commande du tag NFC (3), des données au moyen de la clé électronique et stocker pour le scanner NFC (2) de manière accessible sur le tag NFC (1),
en ce que le scanner NFC (2) comprend des moyens pour accéder aux données cryptées du tag NFC (1) et pour les transmettre au module de commande du scanner NFC (4).

7. Système selon la revendication 6, **caractérisé en ce que** le module de commande du scanner NFC (4) comprend des moyens pour décrypter des données cryptées au moyen de la clé électronique, données qui sont transmissibles au moyen du scanner NFC (2) du tag NFC (1) au module de commande du scanner NFC (4).

8. Système selon la revendication 6 ou 7, **caractérisé en ce que** le module de commande du scanner NFC (4) comprend des moyens pour authentifier au moyen d'une transmission de données d'authentification par l'interface NFC le tag NFC (1), des données du tag NFC (1) n'étant accessibles que dans le cas d'une authentification réussie du tag NFC (1) au moyen du scanner NFC (2).
